# FASCICULE DE BREVET EUROPEEN

(11) **EP 2 148 066 B1**
(45) Date de publication et mention de la délivrance du brevet: **17.08.2011**
(21) Numéro de dépôt: 09008319.7
(22) Date de dépôt: 25.06.2009
(51) Int. Cl.: F02C 7/26, F02C 7/36, B60K 6/24, B60K 6/48, B64C 27/12, B64C 27/24, B60K 6/383, B60K 6/387

(54) **Installation motrice hybride et procédé de commande d'une telle installation motrice**
Hybridmaschinenanlage und Steuerverfahren einer solchen Maschinenanlage
Hybrid power plant and method of controlling such a power plant

(30) Priorité: 18.07.2008 FR 0804093
(43) Date de publication de la demande: 27.01.2010
(73) Titulaire: EUROCOPTER, 13725 Marignane Cédex (FR)
(72) Inventeur: Certain, Bernard, 13090 Aix en Provence (FR)
(74) Mandataire: GPI & Associés

(56) Documents cités:
- WO-A-98/55335
- DE-A1-102006 056 354
- US-A- 3 498 057
- US-A- 3 970 163
- US-A- 4 554 989
- US-A- 5 762 156
- US-A1- 2006 005 544

## Description

La présente invention concerne une installation motrice et un procédé de commande d'une telle installation motrices

Cette installation motrice a pour but d'entraîner en rotation un élément mécanique, une boîte de transmission de puissance d'un giravion par exemple, à l'aide d'au moins un turbomoteur.

Le domaine technique de l'invention est par suite celui des installations motrices munies d'un turbomoteur.

En effet, afin d'entraîner le rotor principal de sustentation et de propulsion d'un giravion notamment via une boîte de transmission principale de puissance, on connaît une première installation motrice visant à mettre en oeuvre un turbomoteur dénommé « turbomoteur à turbine liée».

Un turbomoteur à turbine liée est muni d'un générateur de gaz comportant successivement au moins un compresseur, une chambre de combustion et au moins une turbine de détente, le compresseur étant lié mécaniquement à la turbine de détente par un arbre principal.

Il est concevable d'équiper le compresseur d'une pluralité d'étages de compression, axiaux et/ou centrifuges, et la turbine de détente d'une pluralité d'étages de détente.

En fonctionnement, le turbomoteur aspire l'air ambiant. Cet air est ensuite comprimé avant d'être dirigé dans la chambre de combustion.

Un combustible sous pression est injecté dans la chambre de combustion puis brûlé conjointement avec l'air comprimé.

Les gaz résultant de la combustion sont alors conduits vers la turbine de détente afin d'y être détendus. Ces gaz entrainent alors la rotation de cette turbine de détente autour de son axe de rotation.

On note que la turbine de détente entraîne de fait en rotation le compresseur du générateur de gaz via l'arbre principal.

En outre, l'arbre principal ne sert pas uniquement à lier le compresseur à la turbine de détente. Pour les turbomoteurs à turbine liée, cet arbre principal constitue aussi l'arbre de travail du turbomoteur, apte à mettre en mouvement une boîte de transmission d'hélicoptère par exemple.

Bien qu'efficace, les turbomoteurs à turbine liée sont sensibles au phénomène de pompage. Lorsque ce phénomène se produit, les filets d'air ambiant se décollent des aubes du compresseur ce qui tend à faire remonter l'air comprimé vers ce compresseur.

Par suite, la température dans la chambre de combustion augmente fortement. Les aubes de la turbine liée se mettent alors à fondre quasi-instantanément ce qui amène à la destruction du turbomoteur.

Pour cette raison, les turbomoteurs à turbine liée ne sont pratiquement plus utilisés, du moins ce qui concerne leur application à l'hélicoptère.

Les turbomoteurs à turbine liée ont ainsi été remplacés dans les installations motrices par des turbomoteurs plus performants, dénommés « turbomoteur à turbine libre ».

En effet, un turbomoteur à turbine libre comporte un générateur de gaz, du type présenté précédemment, à la suite duquel est agencée une turbine de travail solidaire de l'arbre de travail du turbomoteur. Contrairement à un turbomoteur à turbine liée, l'arbre principal du générateur de gaz et l'arbre de travail sont distincts. Par suite, un turbomoteur à turbine libre est parfois dénommé « turbomoteur à deux arbres ».

Les gaz provenant de la turbine de détente du générateur de gaz mettent alors en rotation la turbine de travail qui entraine l'arbre de travail du turbomoteur.

Les turbomoteurs à turbine libre permettent de faire fonctionner un hélicoptère sans problème majeur.

Cependant, la consommation en carburant d'un turbomoteurs à turbine libre est relativement élevée.

De plus, les turbomoteurs d'une installation motrice fonctionnent la plupart du temps à un régime moyen de manière à fournir une puissance moyenne, la puissance dite maximale continue dans le cadre d'un hélicoptère par exemple. Cependant, l'installation motrice est parfois sollicitée pour fournir ponctuellement une puissance plus importante, telle que la puissance maximale au décollage pour un hélicoptère.

Par conséquent, les turbomoteurs sont globalement surdimensionnés afin de pouvoir fournir temporairement une puissance importante,

Ainsi, la plupart du temps, le turbomoteur fournit une puissance éloignée de sa puissance maximale ce qui occasionne une consommation de carburant accrue, En effet, la consommation spécifique maximale est obtenue sur un turbomoteur au voisinage de sa puissance maximale, et augmente rapidement pour les puissances faibles.

On note que le document US 3498057 décrit une installation motrice munie selon une variante d'un turbomoteur comportant un compresseur lié à une turbine d'entraînement par un arbre principal, une turbine de travail liée à un arbre de travail et une turbine secondaire liée à un arbre secondaire s'étendant d'une part via une première partie vers la turbine d'entraînement et, d'autre part, via une deuxième partie vers la turbine de travail.

Un moteur électrique est alors lié à l'arbre principal et à la première partie de l'arbre secondaire.

Le document US 3970163 est relatif à une automobile munie d'un moteur comportant un compresseur lié à une turbine par un arbre qui s'étend au travers d'un moteur électrique.

Le document US 572156 présente un turbomoteur ayant un arbre principal et un arbre de travail, ainsi qu'un moyen de couplage de ces arbres principal et de travail ; le moyen de couplage étant en outre lié à un moteur/générateur.

La présente invention a alors pour objet de limiter la consommation de carburant d'une installation motrice en proposant un nouveau type d'installation motrice.

Selon l'invention, une installation motrice hybride comportant un moyen d'entraînement apte à entraîner en rotation un élément mécanique, une boîte de transmission principale de giravion par exemple, est remarquable en ce qu'elle comporte deux turbomoteurs et au moins un moteur électrique mécaniquement lié au moyen d'entraînement pour mettre en rotation ce moyen d'entraînement.

Ainsi, il n'est plus nécessaire de sur-dimensionner le turbomoteur dans la mesure où le moteur électrique peut fournir un surcroit de puissance.

Par exemple, si la puissance moyenne est de l'ordre de 290 kilowatts, le turbomoteur peut être dimensionné pour fournir 300 kilowatts seulement.

Pour fournir la puissance moyenne à l'élément mécanique, l'installation motrice hybride fera alors appel uniquement au turbomoteur.

Par contre, si cet élément mécanique requiert temporairement une puissance maximale de l'ordre de 350 kilowatts, alors l'installation motrice entraînera le moyen d'entraînement à l'aide du moteur électrique et du turbomoteur, de puissances respectives de 60 kilowatts et de 290 kilowatts.

En optimisant le dimensionnement du turbomoteur, l'invention permet alors de réduire la consommation de carburant de l'installation motrice.

On verra par la suite, que cette architecture novatrice procure d'autres avantages, notamment lorsqu'elle est implémentée sur un giravion.

L'invention présente ainsi une ou plusieurs des caractéristiques additionnelles qui suivent.

Avantageusement, l'installation motrice comporte une roue libre externe par turbomoteur, une première et une deuxième roues libres externes pour un premier et un deuxième turbomoteurs par exemple, chaque roue libre externe étant pourvue d'une part d'un pignon menant externe relié à un arbre intermédiaire entrainé par un arbre de travail du turbomoteur correspondant et, d'autre part, d'un pignon mené externe engrené au moyen d'entrainement.

La roue libre externe empêche alors le moteur électrique et la chaîne de puissance d'être bloqué par un turbomoteur, en cas de blocage de ce turbomoteur.

De plus, sur une installation comportant au moins deux turbomoteurs, le blocage d'un turbomoteur n'entraînera pas le blocage de l'autre turbomoteur et de la chaîne de puissance.

Selon une première configuration, le turbomoteur engrène directement le pignon menant externe de la roue libre externe correspondante. Par suite, un arbre de travail et l'arbre intermédiaire associé constituent un unique arbre.

A contrarlo, selon une deuxième configuration, un arbre de travail est relié à l'arbre intermédiaire associé via un système d'engrenages.

Dans ces conditions, le moteur électrique engrène soit le pignon mené externe d'une roue libre externe, soit le moyen d'entrainement,

Avantageusement, le moteur électrique est un moteur sans balais apte à fonctionner d'une part en mode motorisation et, d'autre part, en mode générateur électrique pour freiner ledit élément mécanique et/ou alimenter au moins une batterie ou tout autre organe.

Ainsi, lorsqu'il n'est pas nécessaire de fournir un surcroit de puissance au moyen d'entraînement, le moteur électrique fonctionne en mode génératrice et charge une ou plusieurs batteries, sa ou ses batteries par exemple,

On note qu'un moyen de commande peut réguler ce mode de fonctionnement.

Par ailleurs, l'installation motrice peut comporter un dispositif d'accouplement externe temporaire par turbomoteur, distinct de la roue libre externe associée, apte à lier l'arbre intermédiaire au pignon mené externe.

Par exemple, une installation motrice comportant deux turbomoteurs sera munie d'un premier et d'un deuxième dispositifs d'accouplement externe respectivement distincts des première et deuxième roues libres externes.

Ainsi, si le ou les turbomoteurs sont des turbomoteurs à turbine liée ou des turbomoteurs combinés d'un nouveau type, le moteur électrique sert alors de moyen de démarrage pour ce ou ces turbomoteurs.

En effet, le dispositif d'accouplement temporaire neutralise temporairement la roue libre externe associée ce qui permet au moteur électrique d'entrainer le générateur de gaz du turbomoteur correspondant via son arbre de travail.

L'installation motrice hybride ne nécessite alors pas l'adjonction d'un démarreur ce qui optimise sa masse.

Eventuellement, chaque dispositif d'accouplement externe comporte un embrayage externe usuel commandé par un moyen de commande de l'installation motrice.

Avantageusement, l'installation motrice comporte un unique moteur électrique ainsi qu'un premier et un deuxième turbomoteurs.

Le premier turbomoteur est alors relié par son premier arbre de travail au moyen d'entraînement via un premier arbre intermédiaire, le premier pignon menant externe puis le premier pignon mené externe d'une première roue libre externe, un premier dispositif d'accouplement externe temporaire étant apte à lier ledit premier arbre intermédiaire au premier pignon mené externe.

De même, le deuxième turbomoteur est relié par son deuxième arbre de travail au moyen d'entraînement via un deuxième arbre intermédiaire, le deuxième pignon menant externe puis le deuxième pignon mené externe d'une deuxième roue libre externe, un deuxième dispositif d'accouplement externe temporaire étant apte à lier ledit deuxième arbre intermédiaire au deuxième pignon mené externe.

En outre, au moins un turbomoteur de l'installation motrice est un turbomoteur combiné novateur muni successivement d'un générateur de gaz et d'une turbine de travail, le générateur de gaz entrainant un arbre principal alors que la turbine de travail entraine un arbre de travail, le turbomoteur combiné comportant un moyen d'accouplement interne temporaire entre l'arbre de travail et l'arbre principal de ce turbomoteur combiné.

Le turbomoteur combiné mis en oeuvre par l'installation motrice est un nouveau type de turbomoteur dans la mesure où Il ne consiste ni en un turbomoteur à turbine liée ni en un turbomoteur à turbine libre.

En effet, au démarrage notamment le moyen d'accouplement lie mécaniquement l'arbre de travail à l'arbre principal, et donc le générateur de gaz et la turbine de détente.

Le générateur de gaz comportant successivement au moins un compresseur, une chambre de combustion et au moins une turbine de détente, les vitesses du compresseur et de la turbine de détente croissent conjointement.

Le turbomoteur combiné se trouve alors dans une configuration à turbine liée.

Par la suite, le moyen d'accouplement ne lie plus mécaniquement l'arbre de travail à l'arbre principal. Le turbomoteur combiné se trouve donc dans une configuration à turbine libre.

Ainsi, dans un diagramme compresseur présentant le taux de compression du turbomoteur en ordonnée et le débit d'air réduit en abscisse, on constate que la ligne de fonctionnement d'un turbomoteur combiné se trouve plus proche de sa limite de pompage que de la ligne de fonctionnement d'un turbomoteur à turbine libre.

L'accélération du turbomoteur combiné nécessite alors moins de carburant que l'accélération d'un turbomoteur à turbine libre.

En outre, ce turbomoteur combiné ne nécessite pas l'implémentation d'un démarreur dans la mesure où ses caractéristiques lui permettent d'être démarré par le moteur électrique de l'installation motrice hybride.

Par ailleurs, selon un premier mode de fonctionnement, le moyen d'accouplement accouple l'arbre de travail à l'arbre principal du turbomoteur combiné lorsqu'une différence entre une première vitesse de rotation de cet arbre principal et une deuxième vitesse de rotation de l'arbre de travail est inférieure ou égale à un premier seuil prédéterminé, et désaccouple l'arbre de travail de l'arbre principal lorsque cette différence est supérieure au premier seuil prédéterminé, le premier seuil prédéterminé étant éventuellement regel à zéro et donc à une valeur nulle.

On note que durant la phase de démarrage du turbomoteur combiné, les première et deuxième vitesses de rotation sont égales. La différence entre ces première et deuxième vitesses de rotation étant alors égale au premier seuil prédéterminé, les arbres de travail et principal sont accouplés.

Quand la deuxième vitesse de rotation de l'arbre de travail, et donc de la turbine de travail, atteint sa vitesse nominale en fonctionnement normal à savoir hors cas de panne, l'organe de régulation du turbomoteur combiné maintient cette vitesse nominale de rotation de la turbine de travail via des moyens de régulation usuels connus de l'homme du métier.

A contrario, la première vitesse de rotation de l'arbre principal tend à augmenter. La différence entre les première et deuxième vitesses de rotation devient supérieure au premier seuil prédéterminé. Le moyen d'accouplement désaccouple alors l'arbre de travail de l'arbre principal afin que la première vitesse de rotation de l'arbre principal atteigne sa vitesse maximale en fonctionnement normal.

Par exemple, lorsque le compresseur et la turbine de travail atteignent la vitesse nominale de la turbine de travail de 45000 tours/minute, le moyen d'accouplement désaccouple l'arbre de travail de l'arbre principal.

L'organe de régulation du turbomoteur combiné augmente alors la vitesse de rotation du compresseur jusqu'à une vitesse maximale de 52000 tours par minute, tout en maintenant la vitesse de rotation de la turbine de travail à 45000 tours/minute par des méthodes de régulation usuelles.

Selon un deuxième mode de fonctionnement, le moyen d'accouplement accouple l'arbre de travail à l'arbre principal du turbomoteur combiné lorsqu'une différence entre une première vitesse de rotation de l'arbre principal et une deuxième vitesse de rotation de l'arbre de travail est soit inférieure ou égale à un premier seuil'prédéterminé soit supérieure ou égale à un deuxième seuil prédéterminé, le moyen d'accouplement désaccouplant l'arbre de travail de l'arbre principal lorsque ladite différence est comprise entre les premier et deuxième seuils prédéterminés. Le premier seuil prédéterminé est alors éventuellement égale à une valeur nulle.

Par ailleurs, selon un premier mode de réalisation apte à mettre en oeuvre le premier mode de fonctionnement, le moyen d'accouplement comporte une roue libre interne munie d'une portion interne menante et d'une portion externe menée, la portion interne étant solidarisée à l'arbre de travail alors que la portion externe est solidarisée à l'arbre principal.

Ainsi, lorsque l'arbre principal tourne plus vite que l'arbre de travail à savoir quand la différence entre une première vitesse de rotation de cet arbre principal et une deuxième vitesse de rotation de l'arbre de travail est supérieure à un premier seuil prédéterminé d'une valeur nulle, le moyen d'accouplement est désaccouplé.

Afin de faciliter l'agencement des divers composants du turbomoteur combiné, l'arbre de travail traverse l'arbre principal en lui étant concentrique.

Ce premier mode de réalisation est particulièrement bien adapté, mais non exclusivement, à un turbomoteur combiné ayant un arbre de travail et un arbre principal qui tournent dans le même sens.

Selon un deuxième mode de réalisation apte à mettre en ouvre le premier ou le deuxième mode de fonctionnement, le moyen d'accouplement comporte une chaîne cinématique munie d'un embrayage interne commandé par l'organe de régulation du turbomoteur.

Par exemple, l'arbre principal étant solidaire d'un premier pignon principal, l'arbre de travail étant solidaire d'un deuxième pignon principal, te turbomoteur comportant un premier pignon de liaison engrenant le premier pignon principal et un deuxième pignon de liaison engrenant le deuxième pignon principal, le premier pignon de liaison étant solidaire d'un arbre de liaison traversant le deuxième pignon de liaison en son centre, l'embrayage interne est apte à lier temporairement l'arbre intermédiaire au deuxième pignon Intermédiaire.

En fonction du besoin, l'organe de régulation du turbomoteur accouple, ou non, l'arbre de travail à l'arbre principal via l'embrayage interne,

Par ailleurs, l'arbre de travail peut traverser l'arbre principal en lui étant concentrique ou se trouver dans le prolongement dudit arbre principal.

Plus précisément, selon le premier mode de fonctionnement du deuxième mode de réalisation, le moyen d'accouplement accouple l'arbre de travail à l'arbre principal lorsqu'une différence entre une première vitesse de rotation de cet arbre principal et une deuxième vitesse de rotation de l'arbre de travail est inférieure ou égale à un premier seuil prédéterminé, et désaccouple l'arbre de travail de l'arbre principal lorsque cette différence est supérieure au premier seuil prédéterminé, le premier seuil prédéterminé étant éventuellement égal à zéro soit une valeur nulle.

Selon le deuxième mode de fonctionnement du deuxième mode de réalisation, le moyen d'accouplement accouple l'arbre de travail à l'arbre principal lorsqu'une différence entre une première vitesse de rotation de l'arbre principal et une deuxième vitesse de rotation de l'arbre de travail est soit Inférieure ou égale à un premier seuil prédéterminé soit supérieure ou égale à un deuxième seuil prédéterminé, le moyen d'accouplement désaccouplant l'arbre de travail de l'arbre principal lorsque ladite différence est comprise entre les premier et deuxième seuils prédéterminée, Le premier seuil prédéterminé est alors éventuellement égale à une valeur nulle.

Outre l'Installation motrice, la présente invention a pour objet le procédé de commande de cette installation motrice.

Ce procédé est remarquable en ce que, durant une phase de démarrage, on lie temporairement le moteur électrique au turbomoteur afin de démarrer ce turbomoteur. La présence d'un démarreur spécifique n'est plus impérative

De plus, durant une phase de fonctionnement stabilisée, le turbomoteur entraine avantageusement le moyen d'entraînement et le moteur électrique, ce moteur électrique fonctionnant alors en mode générateur de courant électrique pour alimenter une batterie par exemple.

En outre, on régule le moteur électrique afin de contrôler la vitesse de rotation du moyen d'entrainement.

Enfin, durant une phase transitoire au cours de laquelle le moyen d'entraînement nécessite de la puissance, on peut entraîner le moyen d'entraînement conjointement avec le turbomoteur et le moteur électrique.

L'invention et ses avantages apparaîtront avec plus de détails dans le cadre de la description qui suit avec des exemples de réalisation donnés à titre illustratif en référence aux figures annexées qui représentent :
- la figure 1, une coupe d'un turbomoteur combiné selon un premier mode de réalisation.
- la figure 2, une coupe d'un turbomoteur combiné selon une première variante d'un deuxième mode de réalisation,
- la figure 3, une coupe d'un turbomoteur combiné selon une deuxième variante d'un deuxième mode de réalisation,
- la figure 4, une représentation schématique d'une installation motrice selon l'invention munie d'un moteur électrique qui engrène une roue libre externe, et
- la figure 5, une coupe d'une installation motrice selon l'invention munie d'un moteur électrique qui engrène un moyen d'entraînement.

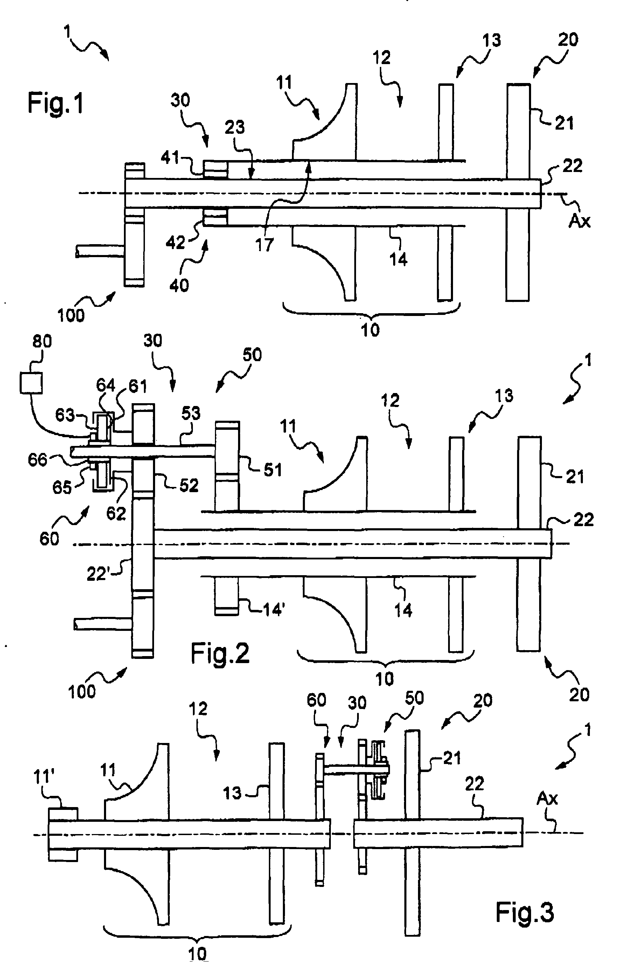

Les figures 1 à 3 présentent un turbomoteur combiné 1 novateur apte à être mis en ouvre par l'Installation motrice revendiquée.

Quel que soit son mode de réalisation, le turbomoteur combiné 1 comprend successivement, selon le sens d'écoulement de l'air au travers du turbomoteur combiné 1, un générateur de gaz 10 puis un ensemble de travail 20.

Selon le sens d'écoulement de l'air au travers du turbomoteur combiné 1, le générateur de gaz est classiquement muni d'au moins un compresseur 11, d'une chambre de combustion 12 et d'au moins une turbine de détente 13 liée au compresseur 11 par un arbre principal 14.

On note que les figures 1 à 2 présentent un unique compresseur alors que la figure 3 fait apparaître un compresseur axial 11' suivi d'un compresseur centrifuge 11.

On comprend que le nombre de compresseur(s), et de turbine(s) de détente peut être optimisé selon les besoins, et ne restreint aucunement la portée de l'invention.

De plus, le compresseur 11, la turbine de détente 13 et l'arbre principal 14 les liant mécaniquement sont aptes à effectuer conjointement un mouvement rotatif autour de l'axe longitudinal AX du turbomoteur. Plus précisément, le compresseur 11, la turbine de détente 13 et l'arbre principal 14 sont solidaires en rotation autour de cet axe longitudinal.

La vitesse de rotation du générateur de gaz doit donc être entendue comme étant la première vitesse de rotation de l'ensemble tournant du générateur de gaz qui comporte le compresseur 11 ainsi que la turbine de détente 13 et l'arbre principal 14, ces trois composants dudit ensemble tournant étant conjointement mis en rotation et donc à la même vitesse autour de l'axe longitudinal AX,

Par ailleurs, l'ensemble de travail 20 comporte au moins une turbine de travail 21 solidaire d'un arbre de travail 22 apte à entraîner un élément externe 100 au turbomoteur, une boîte de transmission de puissance d'un hélicoptère par exemple.

Dans ces conditions, le turbomoteur combiné 1 est un turbomoteur à deux arbres.

Cependant, le turbomoteur combiné ne constitue pas un turbomoteur à turbine libre, ni à turbine lié d'ailleurs.

En effet, le turbomoteur combiné 1 possède un moyen d'accouplement 30 apte à lier temporairement l'arbre de travail 22 à l'arbre principal 14. Ainsi dans certaines configurations le turbomoteur combiné se comportera comme un turbomoteur à turbine liée et, dans d'autres configurations comme un turbomoteur à turbine libre.

Par exemple, selon un premier mode de fonctionnement, quand la différence entre une première vitesse de rotation dudit arbre principal 14 et une deuxième vitesse de rotation dudit arbre de travail 22 est inférieure ou égale à un premier seuil prédéterminé, l'arbre de travail 22 et l'arbre principal 14 sont solidarisés temporairement en rotation autour de l'axe longitudinal AX via le moyen d'accouplement 30.

A contrario, au dessus de ce premier seuil prédéterminé le moyen d'accouplement 30 libérera l'arbre de travail 22, la turbine de travail 21 devenant une turbine libre.

Ainsi, lorsque l'arbre de travail 22 tourne à une deuxième vitesse égale à la première vitesse de l'arbre principal 14, cet arbre de travail 22 est accouplé à l'arbre principal 14.

A contrario, le moyen d'accouplement désolidarise en rotation l'arbre de travail 22 de l'arbre principal 14 lorsque la première vitesse de rotation de l'arbre principal 14 est supérieure à la deuxième vitesse de rotation de l'arbre de travail 22.

Au démarrage, les arbres de travail 22 et principal 14 sont donc liés par le moyen d'accouplement.

Cependant, lorsque l'arbre de travail 22 atteint sa vitesse nominale, l'organe de régulation maintient la deuxième vitesse de rotation de l'arbre de travail 22 à cette vitesse nominale, de 45000 tours par minutes par exemple.

A contrario, la première vitesse de rotation de l'arbre principal continue d'augmenter. Le moyen d'accouplement désaccouple alors les arbres de travail 22 et principal 14 afin que l'arbre principal 14 puisse atteindre sa vitesse maximale.

On note que la régulation n'est pas détaillée dans la mesure où l'homme du métier pourra se référer à la littérature existante.

En référence à la figure 1, selon un premier mode de réalisation, le moyen d'accouplement 30 comprend une roue libre Interne 40.

Cette roue libre interne 40 est alors munie d'une part d'une portion interne 41 menante solidaire de la surface extérieure 23 de l'arbre de travail 22 et, d'autre part, d'une portion externe 42 menée solidaire de la surface interne 17 de l'arbre principal 14.

La roue libre interne 40 est d'un type classique, en étant une roue libre à cliquet ou en comportant une pluralité de galets et de rampes. La nature de la roue libre interne n'est donc nullement limitative.

Ainsi, l'arbre de travail 22 est à même d'entraîner l'arbre principal 14 en rotation, les arbres de travail 22 et principal 14 tournant alors à la même vitesse de rotation.

Par contre, si l'arbre principal 14 tourne plus vite que l'arbre de travail 22 alors cet arbre de travail 22 ne pourra mécaniquement pas entraîner l'arbre principal 14 du fait de la roue libre interne.

Ce premier mode de réalisation est donc particulièrement bien, mais non exclusivement, adapté au turbomoteur combiné ayant une turbine de travail qui tourne dans le même sens que l'ensemble tournant du générateur de gaz.

Enfin, on constate que l'arbre de travail 22 traverse alors l'arbre principal 14 en lui étant concentrique.

En référence à la figure 2, selon le deuxième mode de réalisation, le moyen d'accouplement 30 comporte une chaîne cinématique 50 et un embrayage interne 60 commandé par l'organe de régulation 60 du turbomoteur combiné 1.

On comprend que, du fait de la chaîne cinématique 50, il est possible, en disposant d'une manière adéquate non représentée les différentes pièces mécaniques de cette chaîne cinématique, d'accoupler un arbre de travail 22 et un arbre principal 14 ayant des sens de rotation opposés.

à chaîne cinématique donnée à titre d'exemple comporte un premier pignon principal 14' solidaire de l'arbre principal 14 qui engrène un premier pignon de liaison 51.

Ce premier pignon de liaison 51 est fixé à un arbre de liaison 53 qui traverse un deuxième pignon de liaison 52, ce deuxième pignon de liaison 52 engrenant un deuxième pignon principal 22' solidaire de l'arbre de travail 22.

Dès lors, le moyen d'accouplement 30 est pourvu d'un embrayage interne 60 apte à lier l'arbre de liaison 53 au deuxième pignon de liaison 52.

Cet embrayage interne 60 est par exemple un embrayage à disque usuel muni d'un volant 61, solidaire du deuxième pignon de liaison 52, et d'un disque 62 solidaire en rotation de l'arbre de liaison 53 via des cannelures 65.

De plus, l'embrayage interne 60 est muni d'un plateau de pression 64 équipé d'un diaphragme 63 relié à une goupille d'embrayage 65.

En position embrayée, le plateau de pression 64 plaque le disque 62 contre le volant 61 ce qui solidarise en rotation l'arbre de liaison 53 au deuxième pignon de liaison 52.

Pour désaccoupler l'arbre de liaison 53 du deuxième pignon de liaison 52, et donc l'arbre de travail 22 de l'arbre principal 14, l'organe de régulation déplace la goupille 65 pour agir sur le diaphragme 63. Le plateau de pression se déplace vers l'extrémité libre de l'arbre de liaison ce qui désolidarise le disque 62 du volant 61.

On note que tout autre type d'embrayage pourrait répondre au besoin.

Le deuxième mode de réalisation est intéressant car il offre une plus grande liberté d'utilisation.

Outre le premier mode de fonctionnement, le deuxième mode de réalisation est à même de mettre en oeuvre le deuxième mode de fonctionnement prenant en considération ledit premier seuil prédéterminé mais aussi un deuxième seuil prédéterminé.

Ainsi, au fonctionnement nominal, les arbres de travail 22 et principal 14 sont désaccouplés, la différence entre la première vitesse de rotation de l'arbre principal 14 et la deuxième vitesse de rotation de l'arbre de travail 22 étant comprise entre les premier et deuxième seuils prédéterminés.

Or, si les aubes de la turbine de travail 21 subissent un endommagement alors la vitesse de rotation de la cette turbine de travail va chuter.

La différence entre la première vitesse de rotation de l'arbre principal et la deuxième vitesse de rotation de l'arbre de travail, devient de la sorte supérieure au deuxième seuil prédéterminé.

Par suite, l'organe de régulation va commander l'embrayage interne 60 pour accoupler l'arbre de travail 22 à l'arbre principal, 14 afin de garantir un minimum de puissance.

Selon la première variante de ce deuxième mode de réalisation représentée sur la figure 2, l'arbre de travail 22 traverse l'arbre principal 14 en lui étant concentrique.

A contrario, selon la deuxième variante de ce deuxième mode de réalisation représentée sur la figure 3, l'arbre de travail 22 se trouve dans le prolongement de l'arbre principal 14.

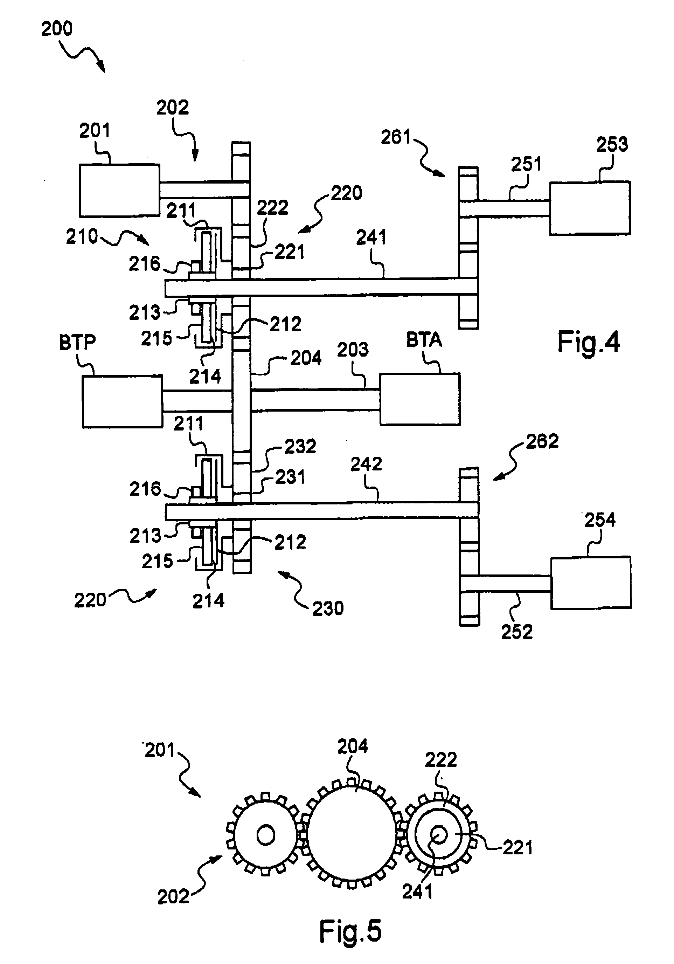

La figure 4 présente une représentation d'une installation motrice 200 mettant en rotation un moyen d'entraînement 204 apte à entraîner une boîte de transmission principale BTP et une boîte de transmission arrière BTA d'un giravion.

L'installation motrice 200 est munie d'un premier et d'un deuxième turbomoteurs 253, 254, avantageusement des turbomoteurs combinés. De plus, cette installation motrice est dite hybride dans la mesure où elle comporte en outre un moteur électrique 201 sans balais.

Ainsi, un premier arbre de travail 251 du premier turbomoteur 253 est mécaniquement lié à un premier arbre intermédiaire 241 par un système d'engrenages 261.

On note qu'à titre de variante, le premier arbre intermédiaire 241 représente une extrémité de l'arbre de travail 251, les premiers arbres intermédiaire 241 et de travail 251 constituant alors un unique arbre.

Le premier arbre intermédiaire 241 est alors solidaire d'un premier pignon externe menant 221 d'une première roue libre externe 220 qui engrène le moyen d'entraînement 204, la première roue libre externe 222 étant une roue libre de type usuelle.

De même, un deuxième arbre de travail 252 du deuxième turbomoteur 254 est mécaniquement lié à un deuxième arbre intermédiaire 242 par un système d'engrenages 262.

On note qu'à titre de variantes, le deuxième arbre intermédiaire 242 représente une extrémité du deuxième arbre de travail 252, les deuxièmes arbres intermédiaire 242 et de travail 252 constituant alors un unique arbre.

Le deuxième arbre intermédiaire 242 est alors solidaire d'un deuxième pignon externe menant 231 d'une deuxième roue libre externe 230 qui engrène le moyen d'entraînement 204, la deuxième roue libre externe 222 étant une roue libre de type usuelle.

Par ailleurs, l'arbre de puissance 202 du moteur électrique 201 engrène le premier pignon externe mené 222.

Toutefois, à titre de variante et en référence à la figure 5, le moteur électrique 201 peut engrener directement le moyen d'entraînement 204 via son arbre de puissance.

En outre, l'installation motrice 200 possède un dispositif d'accouplement externe temporaire par turbomoteur, à savoir un premier et un deuxième dispositifs d'accouplement externe 210, 220 respectivement pour les premier et deuxième turbomoteurs 253, 254.

Chaque dispositif d'accouplement externe est distinct de la roue libre externe associée mais coopère avec cette roue libre externe. Ainsi, les premier et deuxième dispositifs d'accouplement 210, 220 sont respectivement distincts des première et deuxième roues libres externes 220, 230 mais coopèrent avec ces première et deuxième roues libres externes 220, 230.

Chaque dispositif d'accouplement externe 210, 220 comporte un embrayage externe de type usuel, pourvu par exemple d'un volant 211, solidaire du pignon mené externe 222, 232 associé, et d'un disque 212 solidaire en rotation de l'arbre intermédiaire 241, 242 correspondant via des cannelures 213.

De plus, chaque embrayage externe est muni d'un plateau de pression 214 équipé d'un diaphragme 215 relié à une goupille d'embrayage 216.

Chaque dispositif d'accouplement externe est commandé par un moyen de commande, non représenté sur les figures, de l'installation motrice 200.

Ainsi, durant une phase de démarrage, ce moyen de commande accouple chaque arbre intermédiaire 241, 242 au pignon mené externe 222, 232 de la roue libre externe associée 220.

Plus précisément, le moyen de commande plaque le disque 212 contre le volant 211 du premier dispositif d'accouplement 210 pour Iler le premier arbre intermédiaire 241 au premier pignon mené externe 222 de la première roue libre externe 220,

De même, le moyen de commande plaque le disque 212 contre le volant 211 du deuxième dispositif d'accouplement 220 pour lier le deuxième arbre intermédiaire 242 au deuxième pignon mené externe 232 de la deuxième roue libre externe 230.

Ainsi, le moteur électrique 201 est mécaniquement lié aux premier et deuxième turbomoteurs 253, 254.

Le moyen de commande met alors en rotation le moteur électrique 201 qui fonctionne en mode « moteur ». Ce moteur électrique 201 entraîne alors le premier arbre de travail 251, successivement via son arbre de puissance 202, le premier pignon mené externe 222, le premier dispositif d'accouplement 210 puis le premier arbre intermédiaire 241.

De même, le moteur électrique entraine le deuxième arbre de travail 252, successivement via son arbre de puissance 202, le premier pignon mené externe 222, le moyen d'entraînement 204, le deuxième pignon mené externe 232, le deuxième dispositif d'accouplement 220 puis le deuxième arbre intermédiaire 242.

Les premier et deuxième turbomoteurs étant des turbomoteurs combinés, les premier et deuxième arbres de travail 251, 252 mettent en rotation l'ensemble tournant de leur générateur de gaz.

Lorsque ces ensembles tournants atteignent cinquante pourcents de leur vitesse maximale, soit 26000 tours par minute par exemple, le moyen de commande ordonne aux premier et deuxième dispositifs d'accouplement 220, 230 de désaccoupler respectivement le premier pignon mené externe 222 du premier arbre intermédiaire 241 et le deuxième pignon mené externe 232 du deuxième arbre Intermédiaire 242.

En effet, la vitesse de rotation du générateur de gaz de chaque turbomoteur est alors suffisante pour poursuivre la mise en route des premier et deuxième turbomoteurs.

Les turbomoteurs continuent alors d'accélérer jusqu'à atteindre le seuil à partir duquel l'arbre de travail de chaque turbomoteur se désolidarise de son arbre principal.

La vitesse de rotation de l'ensemble tournant du générateur de gaz va alors augmenter jusqu'à sa vitesse maximale, autorisée par l'organe de régulation du turbomoteur.

Par ailleurs, à compter du désaccouplement du premier pignon mené externe 222 au premier arbre intermédiaire 241 et du deuxième pignon mené externe 232 au deuxième arbre intermédiaire 242, le premier arbre de travail 241 entraine le moyen d'entrainement 204 via le premier pignon menant externe 221 et le premier pignon mené externe 222 de la première roue libre externe 220.

De la même façon, le deuxième arbre de travail 242 entraine le moyen d'entrainement 204 via le deuxième pignon menant externe 231 et le deuxième pignon mené externe 232 de la première roue libre externe 230.

En outre, le premier pignon mené externe 222 met en rotation l'arbre de puissance du moteur électrique 201. Ce moteur électrique 201 fonctionne alors en mode générateur de courant et alimente en électricité au moins une batterie par exemple.

On note que la fourniture de courant électrique peut être régulée afin de contrôler la vitesse de rotation du moyen d'entraînement.

Cette possibilité est particulièrement utile pour un giravion.

En effet, en ralentissant le moyen d'entraînement 204, le moteur électrique ralentit la vitesse de rotation du rotor principal.

Or, durant une phase d'autorotation, cette faculté s'avère intéressante dans la mesure où la vitesse de rotation du rotor n'augmentera pas au-delà d'une valeur planchée qui permet de respecter la limitation du régime rotor maximal, lorsque le pilote va baisser le pas des pales.

Par ailleurs, l'invention permet de réaliser une manoeuvre jusqu'à alors impossible. En effet, dans certaines configurations, un pilote peut souhaiter abriter son giravion derrière une colline.

Il doit ainsi augmenter son altitude pour passer au dessus de la colline tout en freinant fortement son giravion.

Classiquement, le pilote cabre le giravion et baisse le pas collectif des pales de son rotor principal. Cependant, le giravion décrit alors une courbe ascendante et ne peut donc pas s'abriter derrière la colline.

Pour freiner son giravion, le pilote tente parfois de le mettre en virage, en dérapage, mais sans grand succès.

Au contraire, avec l'invention, il suffit de ralentir la vitesse de rotation du rotor principal à l'aide du moteur électrique pour permettre au giravion de s'abriter à l'endroit souhaité.

Enfin, si durant une phase transitoire le moyen d'entraînement nécessite une forte puissance, le moyen de commande ordonne au moteur électrique de se mettre en mode « moteur » pour fournir de la puissance au moyen d'entrainement.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les dispositifs d'accouplement externe temporaire de l'installation motrice décrite comportent des embrayages externes à disques mais pourrait être constitués d'un autre type d'embrayage.

## Revendications

1. Installation motrice (200) hybride comportant un moyen d'entraînement (204) apte à entraîner en rotation une boîte de transmission (BTP, BTA) d'un giravion, ainsi qu'au moins un turbomoteur (253, 254) mécaniquement lié audit moyen d'entraînement (204) pour mettre en rotation ce moyen d'entraînement (204)
**caractérisée en ce qu'**elle comporte un moteur électrique (201) ainsi qu'un premier et un deuxième turbomoteurs (253, 254) aptes à entraîner chacun ledit moyen d'entraînement (204), ledit premier turbomoteur (253) étant relié par son premier arbre de travail (251) audit moyen d'entraînement (204) via un premier arbre intermédiaire (241), un premier pignon menant externe (221) puis un premier pignon mené externe (222) d'une première roue libre externe (220), ledit deuxième turbomoteur (254) étant relié par son deuxième arbre de travail (252) audit moyen d'entraînement (204) via un deuxième arbre intermédiaire (242), un deuxième pignon menant externe (231) puis un deuxième pignon mené externe (232) d'une deuxième roue libre externe (230), ledit moteur électrique engrenant soit le premier pignon mené externe (222) soit ledit moyen d'entraînement (204)

2. Installation motrice selon la revendication 1,
**caractérisée en ce qu'**un arbre de travail et ledit arbre intermédiaire associé constituent un unique arbre.

3. Installation motrice selon la revendication 1,
**caractérisée en ce qu'**un arbre de travail (251, 252) est relié à l'arbre intermédiaire (241, 242) associé via un système d'engrenages (261, 262).

4. Installation motrice selon l'une quelconque des revendications précédentes,
**caractérisée en ce qu'**un moteur électrique (201) engrène un pignon mené externe (222) d'une roue libre externe (220).

5. Installation motrice selon l'une quelconque des revendications précédentes,
**caractérisée en ce qu'**un moteur électrique (201) engrène ledit moyen d'entraînement (204).

6. Installation motrice selon l'une quelconque des revendications précédentes,
**caractérisée en ce que** ledit moteur électrique (201) est un moteur sans balais apte à fonctionner d'une part en mode motorisation et d'autre part en mode générateur électrique pour alimenter au moins une batterie et/ou freiner ledit élément mécanique.

7. Installation motrice selon l'une quelconque des revendications précédentes,
**caractérisée en ce qu'**il comporte un dispositif d'accouplement externe (210, 220) temporaire par turbomoteur (253, 254), distinct de la roue libre externe (220, 230) associée, apte à lier ledit arbre intermédiaire (241, 242) au pignon mené externe (222, 232).

8. Installation motrice selon la revendication 7,
**caractérisée en ce que** ledit dispositif d'accouplement externe (210, 220) comporte un embrayage externe commandé par un moyen de commande de l'installation motrice.

9. Installation motrice selon l'une quelconque des revendications précédentes,
**caractérisée en ce qu'**elle comporte un moteur électrique (201) ainsi qu'un premier et un deuxième turbomoteurs (253, 254), ledit premier turbomoteur (253) étant relié par son premier arbre de travail (251) audit moyen d'entraînement (204) via un premier arbre intermédiaire (241), le premier pignon menant externe (221) puis le premier pignon mené externe (222) d'une premier roue libre externe (220), ledit deuxième turbomoteur (254) étant relié par son deuxième arbre de travail (252) audit moyen d'entraînement (204) via un deuxième arbre intermédiaire (242), le deuxième pignon menant externe (231) puis le deuxième pignon mené externe (232) d'une deuxième roue libre externe (230), un premier dispositif d'accouplement externe (210) temporaire étant apte à lier ledit premier arbre intermédiaire (241) au premier pignon mené externe (222) et un deuxième dispositif d'accouplement externe (220) temporaire étant apte à lier ledit deuxième arbre intermédiaire (242) au deuxième pignon mené externe (232).

10. Installation motrice selon l'une quelconque des revendications précédentes,
**caractérisée en ce que** ledit turbomoteur est un turbomoteur combiné muni successivement d'un générateur de gaz (10) et d'une turbine de travail (21), ledit générateur de gaz (10) entrainant un arbre principal (14) alors que ladite turbine de travail (21) entraîne un arbre de travail (22), ledit turbomoteur comportant un moyen d'accouplement (30) interne temporaire entre ledit arbre de travail (22) et ledit arbre principal (14) dudit turbomoteur combiné.

11. Installation motrice selon la revendication 10,
**caractérisée en ce que**, ledit moyen d'accouplement (30) accouple ledit arbre de travail (22) audit arbre principal (14) dudit turbomoteur combiné lorsqu'une différence entre une première vitesse de rotation dudit arbre principal (14) et une deuxième vitesse de rotation dudit arbre de travail (22) est inférieure ou égale à un premier seuil prédéterminé et désaccouple ledit arbre de travail (22) dudit arbre principal (14) lorsque ladite différence est supérieure audit premier seuil prédéterminé.

12. Installation motrice selon la revendication 10,
**caractérisée en ce que**, ledit moyen d'accouplement (30) accouple ledit arbre de travail (22) audit arbre principal (14) dudit turbomoteur combiné lorsqu'une différence entre une première vitesse de rotation dudit arbre principal (14) et une deuxième vitesse de rotation dudit arbre de travail (22) est soit inférieure ou égale à un premier seuil prédéterminé soit supérieure ou égale à un deuxième seuil prédéterminé, ledit moyen d'accouplement (30) désaccouplant ledit arbre de travail (22) dudit arbre principal (14) lorsque ladite différence est comprise entre lesdits premier et deuxième seuils prédéterminés.

13. Installation motrice selon l'une quelconque des revendications 11 à 12,
**caractérisée en ce que** ledit premier seuil prédéterminé à une valeur nulle.

14. Installation motrice selon l'une quelconque des revendications 10 à 13,
**caractérisée en ce que** ledit moyen d'accouplement interne (30) comporte une chaîne cinématique (50) munie d'un embrayage interne (60).

15. Installation motrice selon l'une quelconque des revendications 10 à 13,
**caractérisée en ce que** ledit moyen d'accouplement interne (30) comporte une roue libre interne (40) munie d'une portion interne menante (41) et d'une portion externe menée (42), ladite portion interne (41) étant solidarisée audit arbre de travail (22) alors que ladite portion externe (42) est solidarisée audit arbre principal (14).

16. Procédé de commande d'une installation motrice selon l'une quelconque des revendications précédentes,
**caractérisé en ce que** :
- durant une phase de démarrage de ladite installation motrice, on lie temporairement ledit moteur électrique (201) audit turbomoteur (253, 254) afin de démarrer ce turbomoteur (253, 254), et
- durant une phase transitoire au cours de laquelle le moyen d'entraînement (204) nécessite de la puissance, on entraîne ledit moyen d'entraînement (204) conjointement avec ledit turbomoteur (253, 254) et ledit moteur électrique (201).

17. Procédé de commande selon la revendication 16,
**caractérisé en ce que**, durant une phase de fonctionnement stabilisée, ledit turbomoteur (253, 254) entraîne ledit moyen d'entraînement (204) et ledit moteur électrique (201), ce moteur électrique (201) fonctionnant alors en mode générateur de courant électrique.

18. Procédé de commande selon la revendication 17,
**caractérisé en ce que**, on régule ledit moteur électrique (201) afin de contrôler la vitesse de rotation dudit moyen d'entraînement (204).

## Claims

1. Hybrid engine installation (200) comprising drive means (204) suitable for driving a rotorcraft gearbox (BTP, BTA) in rotation, and at least one gas turbine (253, 254) mechanically linked to said drive means (204) to set said drive means (204) into rotation
**characterised in that** the installation includes an electric motor (201) and first and second gas turbines (253, 254) each suitable for driving said drive means (204), said first gas turbine (253) being connected by its first working shaft (251) to said drive means (204) via a first intermediate shaft (241), a first external driving gearwheel (221), and then a first external driven gearwheel (222) of a first external freewheel (220), said second gas turbine (254) being connected by its second working shaft (252) to said drive means (204) via a second intermediate shaft (242), a second external driving gearwheel (231), and then a second external driven gearwheel (232) of a second external freewheel (230), said electric motor meshing either with the first external driven gearwheel (222) or with said drive means (204).

2. Engine installation according to Claim 1,
**characterised in that** a working shaft and said associated intermediate shaft constitute a single shaft.

3. Engine installation according to Claim 1,
**characterised in that** a working shaft (251, 252) is connected to the associated intermediate shaft (241, 242) via a gear system (261, 262).

4. Engine installation according to any one of the preceding claims,
**characterised in that** an electric motor (201) meshes with an external driven gearwheel (222) of an external freewheel (220).

5. Engine installation according to any one of the preceding claims,
**characterised in that** an electric motor (201) meshes with said drive means (204).

6. Engine installation according to any one of the preceding claims,
**characterised in that** said electric motor (201) is a brushless motor suitable for operating firstly in motor mode and secondly in electricity generator mode to feed electricity to at least one battery and/or to brake said mechanical element.

7. Engine installation according to any one of the preceding claims,
**characterised in that** it includes one temporary external coupling device (210, 220) per gas turbine (253, 254) that is distinct from the associated external freewheel (220, 230) and that is suitable for linking said intermediate shaft (241, 242) to the external driven gearwheel (222, 232).

8. Engine installation according to Claim 7,
**characterised in that** said external coupling device (210, 220) includes an external clutch controlled by control means for controlling the engine installation.

9. Engine installation according to any one of the preceding claims,
**characterised in that** it includes an electric motor (201) and first and second gas turbines (253, 254), said first gas turbine (253) being connected by its first working shaft (251) to said drive means (204) via a first intermediate shaft (241), the first external driving gearwheel (221), and then the first external driven gearwheel (222) of a first external freewheel (220), said second gas turbine (254) being connected by its second working shaft (252) to said drive means (204) via a second intermediate shaft (242), the second external driving gearwheel (231), and then the second external driven gearwheel (232) of a second external freewheel (230), a first temporary external coupling device (210) being suitable for linking said first intermediate shaft (241) to the first external driven gearwheel (222) and a second temporary external coupling device (220) being suitable for linking said second intermediate shaft (242) to the second external driven gearwheel (232).

10. Engine installation according to any one of the preceding claims,
**characterised in that** said gas turbine is a combination gas turbine provided in succession with a gas generator (10) and with a working turbine (21), said gas generator (10) driving a main shaft (14) while said working turbine (21) drives a working shaft (22), said gas turbine including temporary internal coupling means (30) between said working shaft (22) and said main shaft (14) of said combination gas turbine.

11. Engine installation according to Claim 10,
**characterised in that** said coupling means (30) couples said working shaft (22) to said main shaft (14) of said combination gas turbine when a difference between a first speed of rotation of said main shaft (14) and a second speed of rotation of said working shaft (22) is less than or equal to a first predetermined threshold, and decouples said working shaft (22) from said main shaft (14) when said difference is greater than said first predetermined threshold.

12. Engine installation according to Claim 10,
**characterised in that** said coupling means (30) couples said working shaft (22) to said main shaft (14) of said combination gas turbine when a difference between a first speed of rotation of said main shaft (14) and a second speed of rotation of said working shaft (22) is either less than or equal to a first predetermined threshold, or else greater than or equal to a second predetermined threshold, said coupling means (30) decoupling said working shaft (22) from said main shaft (14) when said difference lies between said first and second predetermined thresholds.

13. Engine installation according to either one of Claims 11 and 12,
**characterised in that** said first predetermined threshold has a value of zero.

14. Engine installation according to any one of Claims 10 to 13,
**characterised in that** said internal coupling means (30) comprises a drive system (50) fitted with an internal clutch (60).

15. Engine installation according to any one of Claims 10 to 13,
**characterised in that** said internal coupling means (30) includes an internal freewheel (40) provided with a driving inner portion (41) and a driven outer portion (42), said inner portion (41) being secured to said working shaft (22) while said outer portion (42) is secured to said main shaft (14).

16. Control method for controlling an engine installation according to any one of the preceding claims,
**characterised in that**:
- during a stage of starting said engine installation, said electric motor (201) is linked temporarily to said gas turbine (253, 254) in order to start said gas turbine (253, 254), and
- during a transient stage during which the drive means (204) requires power, said drive means (204) are driven simultaneously by said gas turbine (253, 254) and said electric motor (201).

17. Control method according to Claim 16,
**characterised in that**, during a stage of stabilised operation, said gas turbine (253, 254) drives said drive means (204) and said electric motor (201), said electric motor (201) then operating in electricity generator mode.

18. Control method according to Claim 17,
**characterised in that** said electric motor (201) is regulated to control the speed of rotation of said drive means (204).

## Patentansprüche

1. Hybridmaschinenanlage (200) mit einem Antriebsmittel (204) zum Antreiben eines Getriebes (BTP, BTA) eines Drehflügelflugzeugs, sowie mit mindestens einem Turbomotor (253, 254), der beziehungsweise die mechanisch mit dem Antriebsmittel (204) verbunden ist beziehungsweise sind, um das Antriebsmittel (204) zu drehen, **dadurch gekennzeichnet, dass** die Hybridmaschinenanlage einen Elektromotor (201) sowie einen ersten und einen zweiten Turbomotor (253, 254) aufweist, die jeweils in der Lage sind das Antriebsmittel (204) anzutreiben, wobei der erste Turbomotor (253) über seine erste Arbeitswelle (251) mit dem Antriebsmittel (204) über eine erste Zwischenwelle (241), ein erstes externes Antriebszahnrad (221) und ein erstes externes Abtriebszahnrad (222) eines ersten externen Freilaufs (220) verbunden ist, wobei der zweite Turbomotor (254) über seine zweite Arbeitswelle (252) mit dem Antriebsmittel (204) über eine zweite Zwischenwelle (242), ein zweites externes Antriebszahnrad (231) und ein zweites externes Abtriebszahnrad (232) eines zweiten externen Freilaufs (230) verbunden ist, wobei der Elektromotor entweder mit dem ersten externen Abtriebszahnrad (222) oder mit dem Antriebsmittel (204) in Eingriff steht.

2. Hybridmaschinenanlage nach Anspruch 1, **dadurch gekennzeichnet, dass** eine Arbeitswelle und die Zwischenwelle zusammen eine einzige Welle bilden.

3. Hybridmaschinenanlage nach Anspruch 1, **dadurch gekennzeichnet, dass** eine Arbeitswelle (251, 252) mit der zugehörigen Zwischenwelle (241, 242) über ein Zahnradgetriebesystem (261, 262) verbunden ist.

4. Hybridmaschinenanlage nach einem der vorstehenden Ansprüche, **dadurch gekennzeichnet, dass** ein Elektromotor (201) mit einem externen Abtriebszahnrad (222) eines externen Freilaufs (220) in Eingriff steht.

5. Hybridmaschinenanlage nach einem der vorstehenden Ansprüche, **dadurch gekennzeichnet, dass** ein Elektromotor (201) mit dem Antriebsmittel (204) in Eingriff steht.

6. Hybridmaschinenanlage nach einem der vorstehenden Ansprüche, **dadurch gekennzeichnet, dass** der Elektromotor (201) ein bürstenloser Motor ist, der einerseits als Antriebsmotor und andererseits als Stromgenerator zum Speisen mindestens einer Batterie und/oder zum Bremsen des mechanischen Elements funktionieren kann.

7. Hybridmaschinenanlage nach einem der vorstehenden Anspruch, **dadurch gekennzeichnet, dass** sie eine externe Vorrichtung (210, 220) zum temporären Kuppeln des Turbomotors (253, 254) aufweist, die getrennt von den zugehörigen externen Freilauf (220, 230) in der Lage ist die Zwischenwelle (241, 242) mit dem externen Abtriebszahnrad (222, 232) zu verbinden.

8. Hybridmaschinenanlage nach Anspruch 7, **dadurch gekennzeichnet, dass** die externe Kuppelvorrichtung (210, 220) eine externe Kupplung aufweist, die von einer Steuereinrichtung der Maschinenanlage gesteuert wird.

9. Hybridmaschinenanlage nach einem der vorstehenden Anspruche, **dadurch gekennzeichnet, dass** sie einen Elektromotor (201) sowie einen ersten und einen zweiten Turbomotor (253, 254) aufweist, wobei der erste Turbomotor (253) über seine erste Arbeitswelle (251) mit dem Antriebsmittel (204) über eine erste Zwischenwelle (241), das erste externe Antriebszahnrad (221) und das erste externe Abtriebszahnrad (222) eines ersten externen Freilaufs (220) verbunden ist, wobei der zweite Turbomotor (254) über seine zweite Antriebswelle (252) mit dem Antriebsmittel (204) über eine zweite Zwischenwelle (242), das zweite externe Antriebszahnrad (231) und das zweite externe Abtriebszahnrad (232) eines zweiten externen Freilaufs (230) verbunden ist, wobei eine erste externe Vorrichtung (210) zum zeitweisen Kuppeln in der Lage ist die erste Zwischenwelle (241) mit dem ersten äußeren Abtriebszahnrad (222) zu verbinden und wobei eine zweite externe Vorrichtung zum zeitweisen Kuppeln (220) in der Lage ist die zweite Zwischenwelle (242) mit dem zweiten externen Abtriebszahnrad (232) zu verbinden.

10. Hybridmaschinenanlage nach einem der vorstehenden Ansprüche, **dadurch gekennzeichnet, dass** der Turbomotor ein kombinierter Turbomotor ist, der aufeinanderfolgend mit einem Gasgenerator (10) und einer Arbeitsturbine (21) versehen ist, wobei der Gasgenerator (10) eine Hauptwelle (14) antreibt, wohingegen die Arbeitsturbine (21) eine Arbeitswelle (22) antreibt, wobei der Turbomotor ein internes Kupplungsmittel (30) zum zeitweisen Kuppeln der Arbeitswelle (22) mit der Hauptwelle (14) des kombinierten Turbomotors aufweist.

11. Hybridmaschinenanlage nach Anspruch 10, **dadurch gekennzeichnet, dass** das Kupplungsmittel (30) die Arbeitswelle (22) mit der Hauptwelle (14) des kombinierten Turbomotors kuppelt, wenn die Differenz zwischen einer ersten Drehzahl der Hauptwelle (14) und einer zweiten Drehzahl der Arbeitswelle (22) kleiner oder gleich einem ersten vorbestimmten Schwellenwert ist und die Arbeitswelle (22) von der Hauptwelle (14) entkoppelt wird, wenn diese Differenz größer als dieser erste vorbestimmte Schwellenwert ist.

12. Hybridmaschinenanlage nach Anspruch 10, **dadurch gekennzeichnet, dass** das Kupplungsmittel (30) die Arbeitswelle (22) mit der Hauptwelle (14) des kombinierten Turbomotors kuppelt, wenn eine Differenz zwischen einer ersten Drehzahl der Hauptwelle (14) und einer zweiten Drehzahl der Arbeitswelle (22) entweder kleiner oder gleich einem ersten vorbestimmten Schwellenwert ist oder größer oder gleich einem zweiten vorbestimmten Schwellenwert, wobei das Kupplungsmittel (30) die Arbeitswelle (22) von der Hauptwelle (14) entkoppelt, wenn die Differenz zwischen den ersten und zweiten vorbestimmten Schwellenwerten liegt.

13. Hybridmaschinenanlage nach einem der Ansprüche 11 oder 12, **dadurch gekennzeichnet, dass** der erste vorbestimmte Schwellenwert den Wert 0 hat.

14. Hybridmaschinenanlage nach einem der Ansprüche 10 bis 13, **dadurch gekennzeichnet, dass** das interne Kupplungsmittel (30) eine kinematische Kette (50) aufweist, die mit einer internen Kupplung (60) versehen ist.

15. Hybridmaschinenanlage nach einem der Ansprüche 10 bis 13, **dadurch gekennzeichnet, dass** das interne Kupplungsmittel (30) einen internen Freilauf (40) aufweist, der mit einem inneren Antriebsteil (41) und einem äußeren Abtriebsteil (42) versehen ist, wobei der innere Teil (41) mit der Arbeitswelle (22) fest verbunden ist, wohingegen der äußere Teil (42) mit der Hauptwelle (14) fest verbunden ist.

16. Verfahren zur Steuerung einer Maschinenanlage nach einem der vorstehenden Ansprüche, **dadurch gekennzeichnet, dass**
- während einer Startphase der Antriebsanlage zeitweise der Elektromotor (201) mit dem Turbomotor (253, 254) verbunden ist, um diesen Turbomotor (253, 254) zu starten und
- während einer Übergangsphase, während der das Antriebsmittel (204) Leistung benötigt, das Antriebsmittel (204) zusammen mit dem Turbomotor (253, 254) und dem Elektromotor (201) angetrieben wird.

17. Verfahren zur Steuerung nach Anspruch 16, **dadurch gekennzeichnet, dass** während einer stabilisierten Betriebsphase der Turbomotor (253, 254) das Antriebsmittel (204) und den Elektromotor (201) antreibt, wobei dieser Elektromotor (201) somit als Stromgenerator arbeitet.

18. Verfahren zur Steuerung nach Anspruch 17, **dadurch gekennzeichnet, dass** der Elektromotor (201) geregelt wird, um die Drehzahl des Antriebsmittels (204) zu steuern.
